(19)

Europäisches Patentamt

European Patent Office

Office européen des brevets

(11) **EP 4 431 475 A1**

(12) **EUROPEAN PATENT APPLICATION**

(43) Date of publication:
**18.09.2024 Bulletin 2024/38**

(21) Application number: **23162576.5**

(22) Date of filing: **17.03.2023**

(51) International Patent Classification (IPC):
**C03C 3/097** $^{(2006.01)}$     **C03C 3/11** $^{(2006.01)}$
**C03C 21/00** $^{(2006.01)}$

(52) Cooperative Patent Classification (CPC):
**C03C 21/002; C03C 3/097; C03C 3/11**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **SCHOTT Technical Glass Solutions GmbH**
**07745 Jena (DE)**

(72) Inventors:
• **Dietrich, Rüdiger**
 **07745 Jena (DE)**
• **Oberländer, Eric**
 **07743 Jena (DE)**

(74) Representative: **Schott Corporate IP**
**Hattenbergstraße 10**
**55122 Mainz (DE)**

(54) **CHEMICALLY STRENGTHENED GLASS SHEET AND METHOD FOR ITS PRODUCTION**

(57)    The invention generally relates to glass sheets, in particular to chemically strengthened glass sheets, as well as to a method of production for these glass sheets. More particularly, the invention relates to glass sheets comprising a lithium containing aluminosilicate glass.

Fig. 1

**EP 4 431 475 A1**

**Description**

Field of invention

The invention generally relates to glass sheets, in particular to chemically strengthened glass sheets, as well as to a method of production for these glass sheets. More particularly, the invention relates to glass sheets comprising a lithium containing aluminosilicate glass.

Background of invention

Glass sheets are widely used as viewing panels or protective sheets. For example, it is known to use glass sheets as windshields in automotive applications, or as covers in smartphones.

When using glass sheets as protective covers for sensor applications, the glass sheets need to meet several specifications. In particular, the glass sheets used for protective housings and/or covers, for example for portable devices, mobile phones, or for sensor covers, should show a high resistance against mechanical failure such as breakage, especially when the glass surface has been scratched or abraded. Therefore, the glass sheet surfaces should have a high resistance against scratch formation and/or abrasion, Further, a high weathering or corrosion resistance is required.

Glass sheets comprising or consisting of soda lime glass show neither satisfactory performance in corrosion resistance nor in mechanical strength.

While it is known to use borosilicate glasses instead of soda lime glasses, as borosilicate glasses has superior weathering and/or corrosion resistance as well as a superior resistance to surface defects such as scratches compared to soda lime glasses, their mechanical strength with regard to breakage is still not sufficient.

In order to provide high mechanical strength glass articles, such as glass sheets, may be strengthened, for example by tempering or by ion exchange (so-called chemical toughening or chemical strengthening). For example, it is known to chemically strengthen aluminosilicate glasses (AS glasses) or lithium containing aluminosilicate glasses (so-called LAS glasses). In particular chemically strengthened LAS glasses are known for their high mechanical strength that leads to a high resistance against breakage. However, because of the composition and the resulting glass structure, chemically strengthened LAS glass articles are rather susceptible to scratching and/or abrasion, especially compared to glass articles made of glasses commonly known as "borosilicate glasses", that is, glasses with a rather low content in alkali oxides of less than 10 wt.-% or even less than 5 wt.-% for the total of alkali oxide content and a high content in boron oxide that result in a very abrasion resistant glass network.

Toughened and toughenable glasses and/or glass articles are known, for example, from

US 2018/0057401 A1; US 2018/0029932 A1; US 2017/0166478 A1; US 9,908,811 B2;
US 2016/0122240 A1; US 2016/0122239 A1; US 2017/0295657 A1; US 8,312,739 B2;
US 9,359,251 B2; US 9,718,727 B2; US 2012/0052271 A1; US 2015/0030840 A1;
US 2014/0345325 A1; US 9,487,434 B2; US 9,517968 B2; US 9,567,254 B2; US 9,676,663 B2;
US 2018/0002223 A1; US 2017/0166478 A1; US 2017/0129803 A1; US 2016/01002014 A1;
US 2015/0368153 A1; US 2015/0368148 A1; US 2015/0239775 A1; US 9,908,812 B2;
US 9,902,648 B2; US 9,593,042 B2; WO 2012/126394 A1; US 9,540,278 B2; US 8,759,238 B2;
US 8,075,999 B2; US 4,055,703; DE 10 2010 009 584 B4; and from CN 102690059 A.

Such highly toughenable glasses have been developed to meet the requirements imposed on protective glasses for mobile devices, for example. These are usually aluminosilicate glasses (for short "AS glasses" in the context of the present disclosure), or so-called lithium aluminosilicate glasses (or LAS glasses for short).

In other words, aluminosilicate glasses include silicon oxide $SiO_2$ (or, to be more precise, silicon dioxide) and aluminum oxide $Al_2O_3$ as components, and also alkali oxides except for lithium oxide $Li_2O$, and lithium aluminosilicate glasses additionally include lithium oxide $Li_2O$. Therefore, one difference between the glasses referred to as "aluminosilicate glasses" and as "lithium aluminosilicate glasses" herein is that the lithium aluminosilicate glasses include $Li_2O$, but the aluminosilicate glasses do not. In addition to the aforementioned components, the glass usually includes further components.

These glasses are designed so as to be capable of being chemically toughened. In the context of the present disclosure, a glass capable of being chemically toughened refers to a glass which is accessible to an ion exchange process. In such a process, ions of alkali metals are substituted in a surface layer of a glass article such as a glass sheet. This is done in such a way that a compressive stress zone is established in the surface layer, which is achieved by exchanging ions having smaller radii by ions having larger radii. For this purpose, the glass article is immersed in a so-called ion exchange bath, for example a molten salt, and the ion exchange bath includes the ions with the larger ionic radii, in particular potassium and/or sodium ions, so that the latter migrate into the surface layer of the glass article. In exchange, ions with lower ionic radii, in particular lithium and/or sodium ions, will migrate from the surface layer of the glass article into the ion exchange bath.

As a result, a compressive stress zone is formed, which can be described by the characteristic parameters of compressive stress, abbreviated CS, and depth of compressive stress, which is often referred to as "Depth of Layer", or abbreviated DoL, or, more correctly and used throughout the present application, "Depth of Compressive stress Layer" or "DoCL". The compressive stress depth for potassium exchange, that is, the exchange of sodium in the glass by potassium ions, if it is specified relative to the respective exchanged components or ions, is also referred to as the so-called "K DoL (exchange depth)". If a pure exchange of potassium for sodium (K → Na) is occuring, then the "K DoL" is equivalent to the DoCL. If this exchange happens as second or third ion exchange after an exchange of sodium for lithium, as is the case in embodiments of glass sheets according to the disclosure, however, the following applies: While with respect to potassium-sodium exchange in AS glasses, for example, the terms: exchange depth, compressive stress depth and the DoCL were sometimes used as synonyms, there is a difference between DoCL and exchange depth for the sodium-lithium exchange. Further, for characterization of sodium exchange, often the compressive stress value at a depth of 30 $\mu$m is indicated (also referred to as CS(30)), as well as the depth of the compressive stress layer (DoCL). If, in the scope of the invention, reference is made to the K-DoL, this refers to the - hypothetical - depth of compressive stress layer of the glass sheet if only a potassium-sodium exchange had taken place.

Stress parameters such as DoCL can be determined by a stress-optical zero-crossing measuring method, for example using measuring equipment with the trade names FSM-6000 or SLP 1000. However, the FSM signal only refers to pure potassium exchange. In case a mixed ion exchange takes place involving both potassium and sodium salts that exchange for lithium, DoCL is measured with the SLP 1000.

This measuring equipment can also be used to determine the surface compressive stress and the maximum compressive stress CS of a sheet or a sheet-like glass article for aluminosilicate and/or lithium aluminosilicate glasses.

In recent years, developers have focused on optimizing surface compressive stress while at the same time increasing, if possible, DoCL/DoL values. Both optimizations, i.e. the simultaneous increase of $CS_0/CS_{30}$ and DoCL, result in an increase in stored compressive energy and at the same time stored tensile energy and center tension (CT). However, it was found that breakage pattern in samples that underwent a so called "set drop test" or other performance tests, increased as well which, if it exceeds a certain level, is disadvantageous, resulting in a breakage pattern with lots of small glass particles. An exemplary set drop test is described, for example, in U.S. patent application US 2015/0239775 A1. Also, applicant's own patent EP 3 636 609 B1 describes a set drop test method in detail.

In order to avoid such breakage patterns, developers sought to optimize stress profiles such that the internally stored tensile stress was set to a certain value, that is, high enough to provide a suitable surface compressive stress avoiding easy failure, while at the same time ensuring that upon breakage crack propagation was minimized. To that end, composite stress profiles resulting from mixed ion exchanges were readily developed.

However, while these glass sheet certainly showed an increase in strength tested in performance tests such as the before-mentioned "set drop test", the overall performance of such glass sheets is unsatisfactory. As a critical parameter, DoCL has been identified. However, in glass sheets of the state of the art, increasing the DoCL value necessarily results in an increased internally stored tensile stress which in turn promotes crack propagating.

Therefore, there is a need for optimized strengthened glass sheets that overcome the problems of the state of the art at least partially.

Object of invention

The object of the present invention is to provide glass articles, in particular glass sheets, that overcome the drawbacks of the glass articles of the state of the art at least partially. A further object is to provide a manufacturing process for such glass articles, in particular glass sheets.

Summary of invention

The object is achieved by the subject matter of the independent claims, preferred and specific embodiments are set forth in the dependent claims and the further disclosure.

The disclosure therefore relates to a chemically glass sheet comprising $SiO_2$, $Li_2O$ and $Al_2O_3$ as glass components and having a thickness between at least 0.3 mm and at most 3 mm, having a stress profile showing a local maximum of compressive stress at a depth within the glass article and, for a thickness of 0.7 mm, exhibiting an integral of compressive stress, of at least 3,500 MPa*$\mu$m, a DoCL of at least 160 $\mu$m,

wherein the local maximum is at a depth between at least 25 $\mu$m and at most 60 $\mu$m;
wherein the compressive stress of the local maximum is at least 60 MPa and at most 150 MPa; and
wherein the glass sheet further comprises at least 0.4 wt.-% $B_2O_3$

and/or
wherein the glass comprises a) at least 40 wt.-% SiO$_2$ and b) at most 24 wt.-% Al$_2$O$_3$.

The following definitions apply in the scope of the present disclosure:
An exchange bath is understood to be a salt melt, wherein this salt melt is used in an ion exchange method for a glass or a glass article. In the scope of the present disclosure, the terms: exchange bath and ion exchange bath are used synonymously.

Usually, salts are used in technical-grade purity for exchange baths. This means that despite the use of only sodium nitrate, for example, as the initial substance for an exchange bath, certain impurities are also comprised in the exchange bath. In this case, the exchange bath is a melt of a salt, for example, of sodium nitrate, or of a mixture of salts, for example, a mixture of a sodium salt and a potassium salt. In this case, the composition of the exchange bath is indicated in such a way that it refers to the nominal composition of the exchange bath without consideration of possibly present impurities. Therefore, insofar as a 100% sodium nitrate melt is stated in the scope of the present disclosure, this means that only sodium nitrate was used as the raw material. The actual content of the exchange bath of sodium nitrate may, however, deviate therefrom and this is also usual, since technical-grade raw materials in particular have a certain percentage of impurities. These are, however, usually less than 5 wt.%, referred to the total weight of the exchange bath, in particular less than 1 wt.%.

In a corresponding manner, for exchange baths that have a mixture of different salts, the nominal contents of these salts are indicated without consideration of impurities of the initial substances due to the technical grade. An exchange bath with 90 wt.% KNO$_3$ and 10 wt.% NaNOsthus may also have some small impurities that are caused, however, by the raw materials, and usually should be less than 5%, referred to the total weight of the exchange bath, in particular, less than 1 wt.%.

In addition, the composition of the exchange bath also changes in the course of the ion exchange, in particular, since ions, such as lithium and/or sodium ions, migrate from the glass or the glass article into the exchange bath due to the continued ion exchange. Such a change in the composition of the exchange bath due to aging is also present, of course, but is not considered, as long as it is not otherwise explicitly stated. Rather, in the scope of the present disclosure, for indicating the composition of an exchange bath, the nominal original composition is put down.

In the scope of the present disclosure, a stress profile is understood as the application of mechanical stress in a glass article, such as a glass plate, for example, versus the thickness of the glass article considered, given in a diagram. In the scope of the present disclosure, insofar as a compressive stress profile is indicated, this is understood here as that portion of a stress profile, in which the stress assumes positive values, i.e., is greater than zero. Tensile stress, in contrast, has a negative sign.

In the scope of the present disclosure, a glass sheet is a plate-shaped or disc-shaped glass article and such a glass article is understood to be a glass article in which the lateral dimension is smaller in one spatial dimension, at least an order of magnitude smaller, than in the other two spatial directions, whereby these spatial directions are specified relative to a Cartesian coordinate system, in which these spatial directions each time run perpendicular to one another, and in this case, the thickness in the normal direction to the largest or main surface is measured from one main surface to the other main surface.

Since the thickness is at least one order of magnitude smaller than the width and length of the glass article, the width and length in this case can lie on the same order of magnitude. It is, however, also possible that the length is still clearly greater than the width of the glass article. Plate-shaped glass articles or glass sheets in the sense of the present disclosure can therefore also comprise a glass ribbon or strip.

In the sense of the present disclosure, a glass is understood to be a material and a glass article, such as a glass sheet is understood to be a product produced from the glass material and/or comprising the glass material, for example by shaping during hot forming. In particular, a glass article, such as a glass sheet, can be composed of glass or predominantly composed of glass; thus the glass material can contain up to at least 90 wt.% glass. In the scope of the present invention, it is understood that a glass sheet comprises a glass (or glass material) that comprises components such as SiO$_2$, Al$_2$O$_3$, Li$_2$O, alkali and alkaline earth oxides and further compounds that are known as glass components, and this may be expressed as " the glass sheet comprises a certain component" for short.

In the scope of the present disclosure, a chemical prestressing is understood as a process in which a glass article is immersed in a so-called exchange bath. Further, in the scope of the present disclosure, the expressions chemical prestressing, chemical toughening, chemical hardening and chemical strengthening are used synonymously, referring to glass articles such as glass sheets prestressed or toughened or hardened or strengthened by an ion exchange process. During immersion in a so-called exchange bath, there occurs the exchange of ions. In the sense of the present disclosure, potassium exchange is understood in that potassium ions migrate from the exchange bath into the glass article or glass sheet, in particular into the surface of the glass article or glass sheet, thus, for example, are incorporated therein, whereby simultaneously small alkali ions, such as sodium, for example, migrate from the glass article or glass sheet into the exchange bath. Sodium exchange is understood in a corresponding way, in that sodium ions migrate from the exchange bath into the surface of the glass article or glass sheet, while in contrast, small ions, for example lithium ions migrate from the glass article or glass sheet, in particular from the surface of the glass article, into the exchange bath. As already described above, due to this ion exchange, a compressive stress zone is built up in the surface region of the glass article, for example, the glass sheet.

In the scope of the present document, maximum tensile stress is the value of the tensile stress in the center of the glass article, thus at a depth of half the thickness of the glass article. Maximum tensile stress may also be called "center tension".

The tensile stress is usually provided with a negative sign; in contrast, compressive stresses are given a positive sign, since compression and tension have correspondingly opposite directions. In the scope of the present disclosure, insofar as the value of a tensile stress is indicated without a sign being named, it is understood that this case involves the magnitude of the stress. The definition involves here the sign of the stress, as it is usually used by the person skilled in the art, the developer of prestressed protective glasses with respect to the sign of the stress. This directly deviates from the usual designation of compressive stress as negative and tensile stress as positive, as it is usually used in physics, for example. In the scope of the present disclosure, here, of course, as explained, the definition of stresses reverts back to how they are usually used in the glass industry.

With respect to the terms: network modifier and network former, these are understood to be according to Zachariasen (cited according to Vogel, H., Springer 1992, Glaschemie, page 52).

The chemically strengthened glass sheet of the disclosure offers several advantages. First, the glass sheet comprises, as components, $SiO_2$, $Al_2O_3$, $Li_2O$ as well as $B_2O_3$ and therefore is understood to comprise a LAS-glass, and in particular a LABS glass. In LAS glasses, composite stress profiles that allow for a better performance in strength performance tests such as the aforementioned may readily be obtained by a mixed ion exchange. Further, boron oxide is a component known to promote surface scratch resistance of a glass material and the respective glass article, such as a glass sheet, and may therefore promote a good performance in a set drop testing method.

The glass sheet of the invention has, as indicated by the "local maximum" of the stress profile, a composite stress profile. Such stress profiles with a local maximum in a depth of the glass sheet are also known as "buried CS" to the person skilled in the art. The stress profile of the glass sheet of the disclosure will also be explained in detail with reference to the enclosed figures further below.

The glass sheet typically has a thickness between 0.3 mm and 3 mm, wherein a higher thickness usually means a higher strength in conventional glass strength testing methods such as 4-point bending, but a higher overall weight of the glass sheet and thus a device equipped with such a glass sheet, while a lower glass thickness means a lower glass strength as well as a lower height. Typically, thicknesses within the indicated range are well suited for targeted applications such as cover glasses for electronic devices such as smartphones or tablet PCs, wherein lower glass thicknesses of 1 mm or less are more preferred than thickness above 1 mm.

The glass sheet exhibits an integral of compressive stress ($I_{CST}$ in the scope of the disclosure) of at least 3,500 MPa*μm. The integral $I_{CST}$ is calculated according to the following equation:

$$I_{CST} = \frac{CS_{LM} \times (DoCL - D_{LM})}{2},$$

wherein $CS_{LM}$ is the compressive stress value at the local maximum, and is given in MPa, and wherein DoCL is the depth of the compressive stress layer, and is given in μm, and wherein $D_{LM}$ is the depth of the local stress maximum.

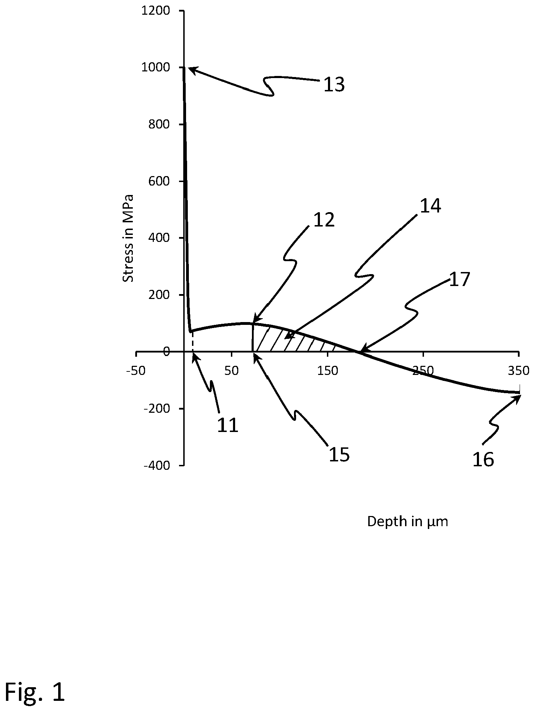

As will be apparent from the depiction of an exemplary stress profile as depicted in fig. 1, the integral $I_{CST}$ is, in other words, the area of a right-angled triangle as an approximation of the exact area of the integral in question. However, inventors found that this approximation is a very good indication of the actual integral, as the stress profile itself is a fit to measured values obtained by stress profilometers as mentioned above.

The integral $I_{CST}$ is, in the scope of the disclosure, indicated for a thickness of 0.7 mm. As glass sheets usually are supplied in a variety of thicknesses, in order to determine if a glass sheet fulfills the condition of the integral within the indicated ranges, the stress profile for a given glass sheet may be measured and the compressive stress at a local maximum as well as the DoCL-value may be determined.

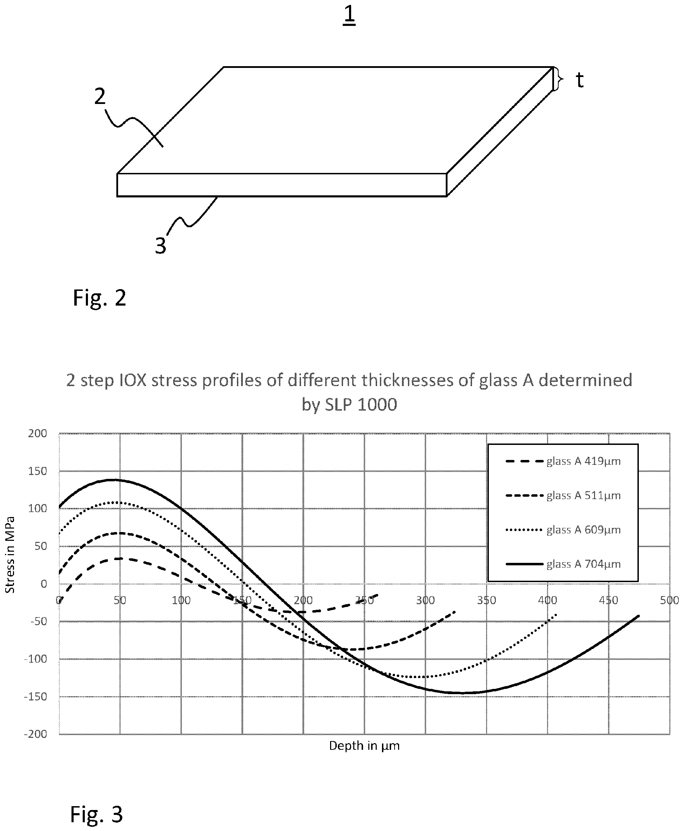

As the local compressive stress maximum as well as DoCL values are thickness related (see figure 3), the obtained values need to be normalized to a "standard" thickness (which is set, in the scope of the present disclosure, to 0.7 mm) in order to allow for comparison of glass samples with different thicknesses. Inventors therefore developed a calculation model for normalization of measured values as follows:

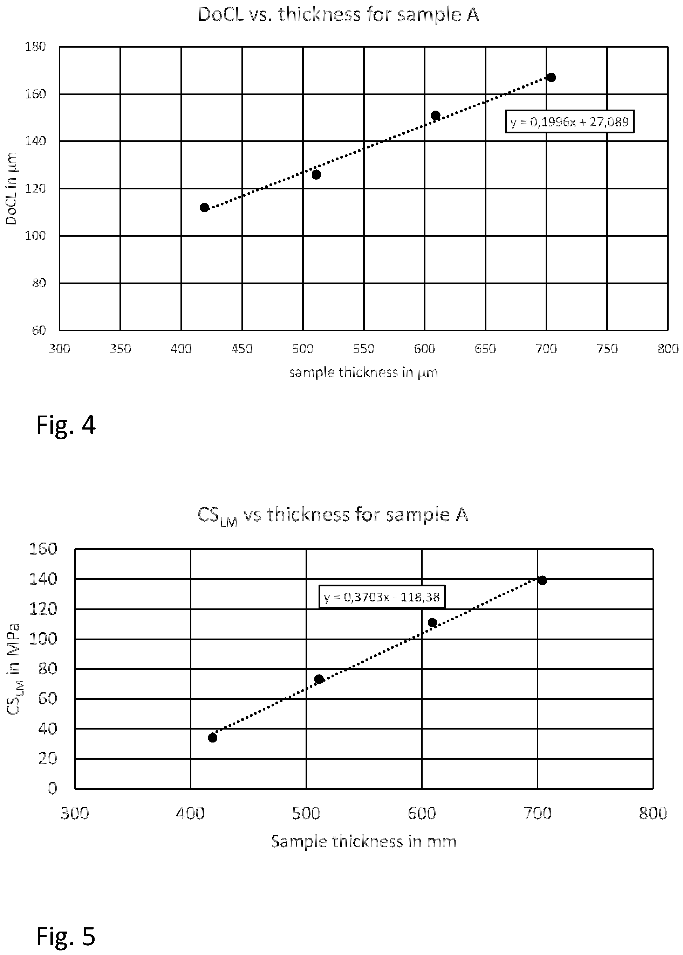

The local compressive stress maximum ($CS_{LM}$) and DoCL values for LAS glasses in the range of 0.3 to 1.0 mm run fairly linear against thickness (see fig.4-6). In order to normalize measured values, reference correlations have been established which provide local compressive stress maximum ($CS_{LM}$) and DoCL graphs in a thickness range of 0.4 mm to 0.7 mm for a given LAS example (glass type A) for a two step ion exchange process creating a local $CS_{LM}$.

In a second step the local compressive stress maximum of the sample to be normalized and the subsequent DoCL is determined and the local compressive stress maximum of the reference sample calculated.

Inventors found that, surprisingly, the correlations between thickness and for glass type A give a fairly good approximation for other glasses as well. For short, in order to compare DoCL values, in order to obtain estimated values for a thickness of 700 $\mu$m, add (if thinner) or substract (if thicker) 20 $\mu$m DoCl per 100 $\mu$m thickness result in a good approximation of the respective value that would result in a 0.7 mm sample. As an example, for normalizing the DoCL that has been measured for a sample of 500 $\mu$m thickness, the following equation might be used:

$$DoCL_{0.7} = DoCL_{0.5} + (700-500)*0.2$$

Please note that in in the above equation, DoCL values are given in $\mu$m.

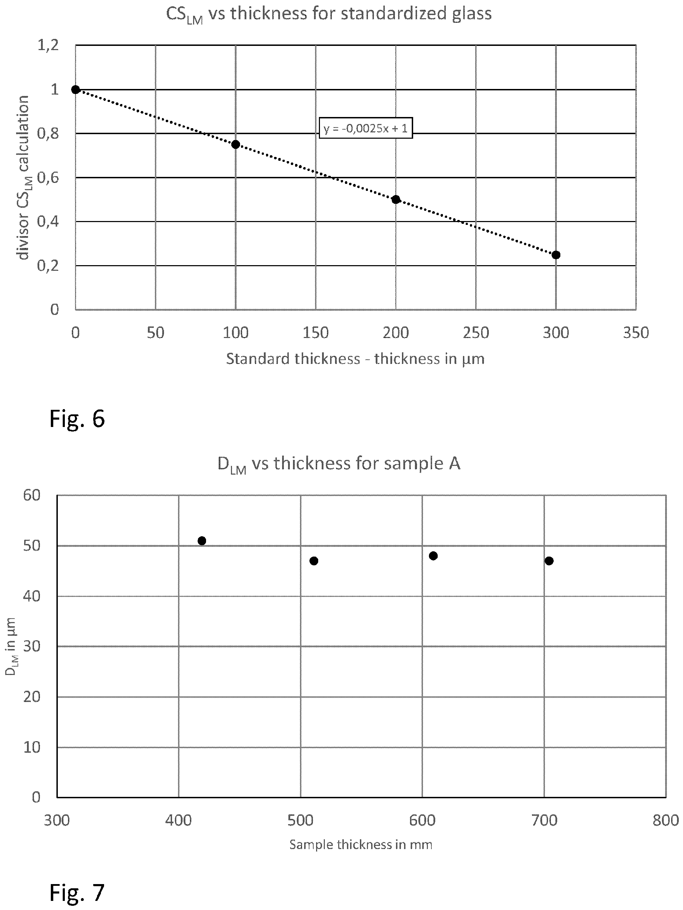

To normalize $CS_{LM}$ values, a similar approach can be used. A method for doing so is illustrated in fig. 6 that shows $CS_{LM}$ values as a function of thickness for glass A. In order to normalize a measured $CS_{LM}$ value for a given thickness x, the following equation may be used:

$$CS_{LM,0.7} = CS_{LM,x} : (-0.0025*(700-x)+1)$$

Please note that here, too, the thicknesses are given in $\mu$m.

In a third step, the $I_{CST}$ of the normalized local compressive stress maximum and the normalized DoCL are calculated. The calculated values for $CS_{LM,\,0.7}$ and $DoCL_{0.7}$ can be used, and the calculated values may be used for comparison.

It is apparent from the above discussion that a high integral of compressive stress is advantageous insofar as a high value means a high strength. However, in terms of overall stored stress, especially tensile stress, it might be suitable to adjust this value to an intermediate level. Therefore, according to an embodiment, a maximum value for the integral of compressive stress is set at 11,000 MPa*$\mu$m.

A further important parameter of the glass sheet of the disclosure is the DoCL. The DoCL indicates at which depth the stress within the glass sheet changes its sign. If a scratch or any other surface damage is deeper than the DoCL, breakage takes place. Therefore, a high DoCL is desired. For a glass thickness of 0.7 mm, an upper value for the DoCL is 200 $\mu$m.

As has been already explained, overall stored stress within the glass sheet should not be too high. Therefore, in order to achieve a reasonable balance between high strength and acceptable breakage pattern, the local maximum is set to be at a depth of at least 25 $\mu$m and at most 60 $\mu$m, and compressive stress of the local maximum is at least 60 MPa and at most 150 MPa, preferably at most 140 MPa and most preferably 130 MPa.

The overall stored stress within the glass sheet in that way does not exceed a critical value, while, at the same time, optimizing the DoCL, shifting it to higher values. This is due to the fact that while a surface compressive stress as well as a high DoCL are obtained (which would cause a high stored tensile stress within a glass sheet with a stress profile known in the art), the stress profile shows a dip in stress at depths below the buried CS maximum. That is, in the glass sheet of the disclosure, overall stress stored within the glass sheet is kept at acceptable values that do not lead to catastrophic failure upon breakage, while the risk for breakage is still minimized, as high surface compressive values and high DoCL values are nevertheless achieved. This dip in compressive strength is designed to be in depth areas/ranges where the contribution to either bending strength or sharp impact strength is small, but the saving of overall stress stored is substantial. Moreover, the saving of overall stress stored in itself shifts the DoCL to higher values. This can be understood considering that a glass network can store a certain limit of compressive stress and moreover, due to the fact that ion exchange depth of Na is significantly higer that the DoCL. Consequently, if stored overall stress is saved in the beginning (surface near region), by reducing the concentration of Na ions in the surface near region, the concentration of Na ions in surface far or bulk near region is higher and will result in stress built up and higher DoCL values. However, the compensation of compressive stress in the surface far region is smaller than the loss of compressive stress in the surface near region. Combining these effects, the design of a dip in the surface near region results in overall stored stress reduction and a DoCL increase.

Inventors found that particularly good results in performance tests have been obtained in case the glass sheet of the invention comprises at least 0.4 wt.-% $B_2O_3$ (which means that the glass material of the glass sheet is a member of the "LABS" glass group) or if the glass comprises at least 40 wt.-% $SiO_2$ and at most 24 wt.-% $Al_2O_3$. Of course, it is according to a preferred embodiment also possible that the glass sheet comprises both $B_2O_3$, that is, at least 0.4 wt.-% $B_2O_3$ and $SiO_2$ and $Al_2O_3$ in the above indicated amounts. The inventors believe this is due to all three of said components being network formers, interacting with each other in a way to provide a glass network that may be easily exchanged while at the same time being rigid enough to store mechanical stresses such that a good performance in mechanical testing arises.

The glass sheet of the disclosure comprises $SiO_2$. $SiO_2$, as the most common glass network former, is the main component of the glass sheet of the disclosure. The glass sheet of the disclosure may comprise at least 45 wt.-% $SiO_2$. Preferably, as $SiO_2$ provides the glass network and, thus, a sort of "backbone" to the glass material, content in $SiO_2$ may be higher, as this provides for a good chemical as well as mechanical stability of the glass sheet. According to embodiments, the glass sheet comprises at least 60 wt.-%, for example. However, as $SiO_2$ also provides for a high melting temperature and viscosity, the content in $SiO_2$ may be limited. In the glass sheets of the disclosure, a suitable upper limit for $SiO_2$ content may be 75 wt.-% or even at most 70 wt.-%.

Alternatively or additionally to the claimed minimum of the glass sheet of the disclosure in terms of content in $B_2O_3$, particularly good results in glass sheets may also be achieved if the glass sheet comprises a) at least 40 wt.-% $SiO_2$ and b) at most 24 wt.-% $Al_2O_3$. While $SiO_2$ is a network former, $Al_2O_3$ is commonly regarded as an intermediate oxide that, while contributing to the glass network modifies it at the same time, which is also explained in detail further below. Inventors found that a good compromise between providing a rigid network that is able to store mechanical stresses may be achieved if the glass comprises at least 40 wt.-% in $SiO_2$, while in that case, the content in $Al_2O_3$ should not exceed 24 wt.-%. $Al_2O_3$ may provide for a good and rigid network, however, if the content in $Al_2O_3$ exceeds a certain level - which has in the glasses of the invention, especially in case they do not comprise $B_2O_3$ - the melting temperature gets too high.

With respect to ranges, the inventors understand that all ranges cover all values in between as well as all subranges.

The glass sheets of the disclosure also comprise $Al_2O_3$. $Al_2O_3$ may either be regarded as a network former or an intermediate oxide and is a known component of glasses that may be chemically strengthened. It has been found that a content of at least 7 wt.-%, preferably at least 10 wt.-%, is advantageous to provide for a good toughenability of the glass sheet. However, the content is limited and should not exceed 24 wt.-% $Al_2O_3$.

As has been explained above, the LAS glass comprised by the glass sheet of the disclosure comprises $B_2O_3$. $B_2O_3$ is a known glass component and acts as a network former, while at the same time lowering the melting point of a glass melt. Further, as has been explained above, the addition of $B_2O_3$ may also result in an advantageous increase in the scratch resistance of a glass or glass article. However, a high content of $B_2O_3$ may have an adverse effect on the toughenability of a glass or glass article. The content of $B_2O_3$ may therefore be limited according to embodiments of the glass sheet of the disclosure. In particular, according to an embodiment, the content in $B_2O_3$ is set to be 8 wt.-% at most. Preferably, the $B_2O_3$ may even be lower, for instance at most 7 wt.-% or at most 6 wt.-% or even at most 5 wt.-%.

$Li_2O$ is a mandatory component of the glass sheet of the disclosure, as it enables sodium exchange. It further provides for a good strength of toughened glasses with respect to sharp impact loads, i.e. impacts on the surface of a glass or a glass article by particles exhibiting an angle of less than 100°. According to the disclosure, the glass sheet therefore may comprise at least 0.1 wt.-% preferably at least 1 wt.-% $Li_2O$ and more preferably at least 3 wt.-% $Li_2O$. However, $Li_2O$ content should not be too high and is preferably limited, as $Li_2O$ is known to promote demixing/segregation and crystallization of glasses. Preferably, according to embodiments, the glass sheet comprises at most 12 wt.-% $Li_2O$, more preferably at most 6 wt.-%.

According to a further embodiment, the glass sheet comprises $Na_2O$. $Na_2O$, as an alkali oxide, lowers the melting point of glass melts and is therefore advantageous. Further, $Na_2O$ is advantageous for glass sheet that show, after ion exchange, good strength in blunt impact tests or a high bending strength that may be determined in static strength tests such as flexural strength according to the four point bending test or strength determined according to a double ring test, as well as against blunt impact loads, as the the ball drop test. However, a too high content in $Na_2O$ may be detrimental to the chemical resistance of the glass sheet and therefore, $Na_2O$ content is preferably limited. According to an embodiment, the glass sheet comprises at least 0.2 wt.-% $Na_2O$, preferably at least 0.5 wt.-% $Na_2O$ and more preferably at least 1 wt.-% $Na_2O$. An upper limit may be 16.5 wt.-% or 15 wt.-% $Na_2O$, and the content in $Na_2O$ may, according to an embodiment, be even much lower, for example at most 4 wt.-%.

According to a further embodiment, the surface compressive stress is at least 650 MPa and preferably at most 1,100 MPa, preferably for a glass sheet thickness between 0.3 mm to 3 mm, in particular for a glass sheet thickness of 0.7 mm. For glass sheet thicknesses between 0.46 mm to 3mm, a preferred minimum value of surface compressive stress is 700 MPa. Setting surface compressive stress values within the range indicated above provides for glass sheets of the disclosure with good overall strength and at the same time a superior performance in test methods such as set drop testing compared to glass sheets of the prior art.

According to an embodiment, the glass sheet comprises the following components, given in wt.-% on an oxide basis:

| | |
|---|---|
| $SiO_2$ | 40 to 70, preferably 60 to 70 |
| $Al_2O_3$ | 7 to 24, preferably 10 to 24 |

(continued)

| | |
|---|---|
| Li$_2$O | 0.1 to 12, preferably 1 to 12, more preferably 1 to 6, wherein in each case, a preferable lower limit may be 3 |
| Na$_2$O | 0.2 to 16.5, preferably 0.5 to 15, more preferably 0.5 to 4 |
| B$_2$O$_3$ | 0 to 8, preferably 0 to 5, more preferably 0.4 to 5 |
| ZrO$_2$ | 0 to 3 |
| CaO | 0 to 6 |
| K$_2$O | 0 to 1 |
| MgO | 0 to 6 |
| CeO$_2$ | 0 to 1 |
| ZnO | 0 to 1 |
| P$_2$O$_5$ | 0 to 2 |
| Fe$_2$O$_3$ | 0 to 0.1 |
| SrO | 0 to 1 |
| SnO$_2$ | 0 to 1 |
| TiO$_2$ | 0 to 2 |
| Nd$_2$O$_3$ | 0 to 0.5 |
| SO$_3$ | 0 to 0.5 |
| Cl | 0 to 0.5 |

When reference is made to the composition of the glass sheet, this preferably refers to the glass sheet composition prior to chemical toughening. Of course, this expression is also understood to refer to the composition of the glass material that is comprised by the glass sheet.

Further, the glass sheet of the disclosure may comprise further components, such as modifiers, fining agents, colorants and/or decolorants, which are well known to the person skilled in the art. These further components may add up to 2 wt.-%.

The disclosure further relates to a method for producing a chemically strengthened glass sheet, preferably a strengthened glass sheet according to embodiments of the disclosure. The method comprises:

- providing a glass sheet (1),

- providing a bath comprising a molten alkali salt or a mixture of molten alkali salts,

- immersing the glass sheet (1) in the bath, so that an ion exchange takes place,

- performing at least three ion exchanges.

The method of the present disclosure is, in other words, a three-step ion exchange process. While three step ion exchange processes are disadvantageous in terms of manufacturing costs, inventors found that the superior performance of the thus obtained glass sheets compensate for these higher costs.

Bath compositions and temperatures and the duration of the ion exchange preferably are carefully adjusted in every step of the ion exchange according to embodiments.

For example, and according to an embodiment, for the first ion exchange, the bath temperature may be set between at least 380°C and at most 450°C, preferably at most 440°C.

According to an embodiment, for the first ion exchange, the duration may be between at least 2 hours and at most 15 hours, preferably at most 14 hours.

According to a further embodiment, for the first ion exchange, the bath may comprise a sodium salt, preferably sodium nitrate, and wherein, preferably, the bath comprises, except for unavoidable trace amounts, only a sodium salt, in particular, only sodium nitrate.

The first ion exchange step may, in other words, be an almost pure exchange of sodium ions for lithium ions.

According to an embodiment, for the second ion exchange, the bath temperature may be between at least 360°C and at most 430°C. A preferred lower temperature might be 370°C. Preferred upper temperatures might by 410°C or 400°C.

Further, according to an embodiment, for the second ion exchange, the duration is between at least 0.5 hours and at most 5 hours, preferably at most 4.5 hours.

Further still, according to an embodiment, for the second ion exchange, the bath may comprise sodium salt, preferably sodium nitrate, and a lithium salt, preferably lithium nitrate, and wherein the percentage, in weight, of sodium salt is between 60 to 90, and of lithium salt is between 10 and 40.

In other words, for the second ion exchange, ion exchange may be effected in a mixed salt bath, especially a salt bath comprising lithium. The purpose in adding Lithium in the indicated amounts is to achieve a "back diffusion" of lithium ions into the glass in the surface near region, to achieve the dip in compressive strength.

According to an embodiment, for the third ion exchange, the bath temperature may be between at least 360°C and at most 440°C. According to an embodiment, the bath temperature may also be between 395°C and 425°C.

Further, according to an embodiment, for the third ion exchange, the duration may be between at least 0.5 hours and at most 7 hours, preferably at most 6.5 hours.

Further still, according to an embodiment, for the third ion exchange, the bath may comprise a potassium salt, preferably potassium nitrate, and wherein, preferably, the bath comprises, except for unavoidable trace amounts, only a potassium salt, in particular, only potassium nitrate.

In other words, the third ion exchange is the ion exchange needed for providing the glass sheet with high surface compressive stress values while the first two ion exchange steps are needed to provide the glass with high DoCL values.

The method of the disclosure therefore is a suitable way to provide the glass sheet with a combined stress profile that is optimized for user applications as may be simulated in performance tests such as the aforementioned set drop test. The disclosure therefore also relates to glass sheets that are obtained or obtainable in a three step ion exchange method of the disclosure.

The disclosure further relates to a use of the chemically strengthened glass sheet, preferably a chemically strengthened glass sheet according to embodiments of the disclosure and/or obtained or at least obtainable in a method according to the disclosure, as a cover glass, such as a cover glass for a smartphone, or tablet PC, or any portable device, or for an optical sensor, such as, for example, a LiDAR sensor.

Examples

The invention will now be further explained with respect to the following examples.

Generally, glass compositions used for glass sheets according to the disclosure may be glasses of the LABS glass material class. A preferred compositional range comprises the following components, given in wt.-% on an oxide basis:

| | |
|---|---|
| $SiO_2$ | 40 to 70, preferably 60 to 70 |
| $Al_2O_3$ | 7 to 24, preferably 10 to 24 |
| $Li_2O$ | 0.1 to 12, preferably 1 to 12, more preferably 1 to 6, wherein in each case, a preferable lower limit may be 3 |
| $Na_2O$ | 0.2 to 16.5, preferably 0.5 to 15, more preferably 0.5 to 4 |
| $B_2O_3$ | 0 to 8, preferably 0 to 5, more preferably 0.4 to 5 |
| $ZrO_2$ | 0 to 3 |
| $CaO$ | 0 to 6 |
| $K_2O$ | 0 to 1 |
| $MgO$ | 0 to 6 |
| $CeO_2$ | 0 to 1 |
| $ZnO$ | 0 to 1 |
| $P_2O_5$ | 0 to 2 |
| $Fe_2O_3$ | 0 to 0.1 |
| $SrO$ | 0 to 1 |
| $SnO_2$ | 0 to 1 |
| $TiO_2$ | 0 to 2 |
| $Nd_2O_3$ | 0 to 0.5 |
| $SO_3$ | 0 to 0.5 |
| $Cl$ | 0 to 0.5 |

Of course, the glass material and/or the glass sheet may comprise further components, such as modifiers, fining agents, colorants and/or decolorants, which are well known to the person skilled in the art. These further components may add up to 2 wt.-%.

Listed in the following table 1 are three glass types A, B, C that are preferred for the glass sheets according to embodiments of the disclosure. The components are given in wt.-% on an oxide basis. Or course, slight deviations from the composition indicated in table 1 are possible and due to typical slight compositional deviations in raw materials and/or weighing errors.

Table 1

| Glass type | A | B | C |
|---|---|---|---|
| $SiO_2$ | 66,3 | 66,2 | 66,2 |
| $Al_2O_3$ | 17,9 | 17,8 | 22,5 |
| $Li_2O$ | 4,3 | 3,9 | 4,3 |
| $Na_2O$ | 1,3 | 2,3 | 0,7 |
| $B_2O_3$ | 3,7 | 3,9 | 0,2 |
| $ZrO_2$ | 0,9 | 0,4 | 2,0 |
| CaO | 3,7 | 2,5 | 0,02 |
| $K_2O$ | 0,3 | 0,3 | 0,2 |
| MgO | 0,06 | 0,9 | 1,0 |
| $CeO_2$ | 0,7 | 0,5 | 0 |
| ZnO | 0,1 | 0,1 | 0,4 |
| $P_2O_5$ | 0,3 | 0,6 | 0,2 |
| $Fe_2O_3$ | 0,01 | 0,01 | 0,01 |
| SrO | 0,5 | 0,4 | 0 |
| $SnO_2$ | 0,07 | 0,3 | 0,5 |
| $TiO_2$ | 0 | 0 | 1,6 |
| $Nd_2O_3$ | 0 | 0 | 0,2 |
| Cl | 0 | 0,1 | 0,1 |
| Sum | 100,14 | 100,21 | 100,13 |

Deviation from the 100 wt.-% sum are due to rounding errors.

Glass sheets comprising glass types A, B, C above were manufactured and underwent several ion exchanges as listed in following table 2.

In table 2, "IOX" is used as an abbreviation for ion exchange. As a lithium salt, any salt may be used, however, preferably LiNOs is used, due its compatibility with the preferably used nitrate of sodium and potassium that are frequently employed in ion exchange processes. $CS_0$ denotes the surface compressice stress, that is, the compressive stress at depth 0, while $CS_{50}$ refers to the compressive stress value at a depth of 50 $\mu$m. $D_{LM}$, $CS_{LM}$ refer to the depth and the compressive stress of the local maximum. Values obtained in a set drop testing have been indicated. For the set drop test, sandpaper with #60 was preferably used.

Table 2

| Sample No. | 1 | 2 | 3 | 4 | 5 |
|---|---|---|---|---|---|
| Glass type | A | A | A | A | A |
| Thickness [mm] | 0,707 | 0,703 | 0,703 | 0,703 | 0,707 |
| | | | | | |
| t 1st IOX | 4,0 h | 4,0 h | 4,0 h | 4,0 h | 4,0 h |
| T 1st IOX | 440 °C | 440 °C | 440 °C | 440 °C | 440 °C |
| $NaNO_3$ % | 100% | 100% | 100% | 100% | 100% |
| | | | | | |
| t 2nd IOX | 1,0 h | 1,0 h | 1,0 h | 1,0 h | 1,0 h |
| T 2nd IOX | 380 °C | 380 °C | 380 °C | 400 °C | 380 °C |
| $NaNO_3$ % | 80% | 80% | 70% | 70% | 80% |
| Li-salt % | 20% | 20% | 30% | 30% | 20% |
| | | | | | |
| t 3rd IOX | 1,0 h | 2,0 h | 2,0 h | 2,0 h | 1,0 h |
| T 3rd IOX | 420 °C | 420 °C | 420 °C | 420 °C | 420 °C |
| $KNO_3$ % | 100% | 100% | 100% | 100% | 100% |
| | | | | | |
| $CS_0$ [MPa] | 796 | 817 | 817 | 806 | 796 |
| K-DoL [µm] | 3,0 | 4,2 | 4,2 | 4,3 | 3,0 |
| $CS_{LM}$ [MPa] | 117 | 104 | 103 | 98 | 117 |
| $D_{LM}$ [µm] | 31 | 40 | 31 | 33 | 31 |
| $CS_{50}$ | 114 | 103 | 100 | 96 | 114 |
| DoCL [µm] | 178 | 179 | 175 | 172 | 178 |
| CT [MPa] | 136 | 118 | 116 | 108 | 136 |
| area T (MPa*µm) | 8600 | 7247 | 7411 | 6811 | 8600 |
| | | | | | |
| Height in #60 set drop test | | | | | |
| 1 [cm] | 70 | 40 | 90 | 100 | 70 |
| 2 [cm] | 130 | 60 | 90 | 120 | 130 |
| 3 [cm] | 80 | 80 | 50 | 100 | 80 |
| 4 [cm] | 90 | 70 | 100 | 80 | 120 |
| 5 [cm] | 90 | 100 | 130 | 110 | 90 |
| 6 [cm] | 90 | 80 | 70 | 60 | 90 |
| 7 [cm] | 130 | 90 | 130 | 100 | 130 |
| 8 [cm] | 130 | 25 | 60 | 80 | 130 |
| 9 [cm] | 90 | 140 | 50 | 50 | 90 |
| 10 [cm] | 80 | 60 | 90 | 50 | 80 |
| 11 [cm] | 50 | 110 | 50 | 40 | 50 |
| 12 [cm] | 120 | 40 | | 70 | 120 |
| MW | 96 | 75 | 83 | 80 | 98 |
| Median | 90 | 75 | 90 | 80 | 90 |

| Sample No. | 1 | 2 | 3 | 4 | 5 |
|---|---|---|---|---|---|
| Glass type | A | A | A | A | A |
| Thickness [mm] | 0,707 | 0,703 | 0,703 | 0,703 | 0,707 |
| Min | 50 | 25 | 50 | 40 | 50 |
| Max | 130 | 140 | 130 | 120 | 130 |
| Span | 80 | 115 | 80 | 80 | 80 |

Table 2, continued

| Sample No. | 6 | 7 | 8 | 9 | 10 | 11 |
|---|---|---|---|---|---|---|
| Glass type | B | B | B | C | C | C |
| Thickness [mm] | 0,710 | 0,708 | 0,705 | 0,706 | 0,706 | 0,702 |
| | | | | | | |
| t 1st IOX | 9,0 h | 9,0 h | 6,0 h | 14,0 h | 14,0 h | 14,0 h |
| T 1st IOX | 410 °C | 410 °C | 440 °C | 390 °C | 390 °C | 390 °C |
| $NaNO_3$ % | 100% | 100% | 100% | 100% | 100% | 100% |
| | | | | | | |
| t 2nd IOX | 1,0 h | 1,0 h | 1,0 h | 2,0 h | 4,0 h | 4,0 h |
| T 2nd IOX | 390 °C | 390 °C | 390 °C | 380 °C | 380 °C | 400 °C |
| $NaNO_3$ % | 80% | 80% | 80% | 80% | 80% | 80% |
| Li-salt % | 20% | 20% | 20% | 20% | 20% | 20% |
| | | | | | | |
| t 3rd IOX | 3,0 h | 6,0 h | 3,0 h | 3,0 h | 3,0 h | 3,0 h |
| T 3rd IOX | 400 °C | 400 °C | 400 °C | 400 °C | 400 °C | 400 °C |
| $KNO_3$ % | 100% | 100% | 100% | 100% | 100% | 100% |
| | | | | | | |
| $CS_0$ [MPa] | 758 | 731 | 719 | 873 | 864 | 878 |
| K-DoL [µm] | 5,1 | 7,1 | 5,3 | 3,0 | 3,1 | 3,0 |
| $CS_{LM}$ [MPa] | 74 | 61 | 64 | 104 | 101 | 96 |
| $D_{LM}$ [µm] | 41 | 32 | 36 | 34 | 53 | 53 |
| $CS_{50}$ | 72 | 57 | 62 | 103 | 101 | 96 |
| DoCL [µm] | 173 | 175 | 174 | 167 | 172 | 171 |
| CT [MPa] | 69 | 61 | 64 | 96 | 94 | 90 |
| area T (MPa*µm) | 4884 | 4362 | 4416 | 6916 | 6010 | 5664 |
| | | | | | | |
| Height in #60 set drop test | | | | | | |
| 1 [cm] | 50 | 30 | 30 | 130 | 70 | 40 |
| 2 [cm] | 100 | 50 | 90 | 130 | 100 | 25 |
| 3 [cm] | 50 | 60 | 70 | 110 | 80 | 90 |
| 4 [cm] | 20 | 50 | 30 | 50 | 40 | 70 |
| 5 [cm] | 80 | 50 | 20 | 60 | 90 | 100 |
| 6 [cm] | 25 | 40 | 30 | 110 | 40 | 70 |
| 7 [cm] | 80 | 40 | 50 | 80 | 60 | 50 |

| Sample No. | 6 | 7 | 8 | 9 | 10 | 11 |
|---|---|---|---|---|---|---|
| Glass type | B | B | B | C | C | C |
| Thickness [mm] | 0,710 | 0,708 | 0,705 | 0,706 | 0,706 | 0,702 |
| 8 [cm] | 50 | 50 | 70 | 20 | 60 | 90 |
| 9 [cm] | 25 | 50 | 30 | 70 | 70 | 60 |
| 10 [cm] | 50 | 40 | 25 | 50 | 100 | 80 |
| 11 [cm] | 70 | 50 | 50 | 80 | 60 | 80 |
| 12 [cm] | 50 | 40 | 30 | | | |
| MW | 54 | 46 | 44 | 81 | 70 | 69 |
| Median | 50 | 50 | 30 | 80 | 70 | 70 |
| Min | 20 | 30 | 20 | 20 | 40 | 25 |
| Max | 100 | 60 | 90 | 130 | 100 | 100 |
| Span | 80 | 30 | 70 | 110 | 60 | 75 |

Description of figures

The invention will also be explained further with reference to the figures. They show:

Fig. 1       an exemplary schematic stress profile of a glass sheet of the disclosure with a local maximum,
Fig. 2       a schematic and not drawn to scale depiction of a glass sheet,
Fig. 3       stress profiles of glass sheets of the invention with different thicknesses,
Figs. 4 to 7       diagrams illustrating the method to calculate the $I_{CST}$ for glass sheets of different thicknesses; and
Fig. 8       a diagram illustrating the correlation between set drop strength and the $I_{CST}$.

The concept of the $I_{CST}$ will now be further explained with reference to enclosed figure 1. Fig. 1 is a depiction of a schematic stress profile of a glass sheet according to the disclosure, having a thickness of 0.7 mm. Center tension (or CT for short) 16 is determined at the center of the glass sheet, here at a depth of 351-355 $\mu$m. Surface compressive stress 13 is between 650 MPa and MPa, here, approximately 1000 MPa. Reference numeral 12 depicts the stress value of the local compressive stress maximum at thickness 15 of the local compressive stress maximum. The integral of compressive stress ($I_{CST}$) 14 is the hatched area and has a value of at least 3,500 MPa*$\mu$m. The integral $I_{CST}$ is calculated according to the following equation:

$$I_{CST} = \frac{CS_{LM} \times (DoCL - D_{LM})}{2},$$

wherein $CS_{LM}$ is the compressive stress value at the local maximum, and is given in MPa, and wherein DoCL is the depth of the compressive stress layer, and is given in $\mu$m, and wherein $D_{LM}$ is the depth of the local stress maximum. The hypothetical DoL or K-DoL is indicated to be about 11, whereas the DoCL is indicated by reference numeral 17.

Further, fig. 2 is a schematic and not drawn to scale depiction of glass sheet 1 according to embodiments of the disclosure, having thickness t as well as two side faces 2, 3.

Figs. 3 to 7 illustrate the thickness dependence of certain characteristics of stress profiles of glass sheets according to embodiments.

Fig. 3 depicts the depth of the local maximum in compressive stress for samples that have been ion exchanged in a two step ion exchange. While for the final product, three ion exchange steps during production might be most preferred, the local maximum is already obtained in a two step ion exchange process and the stress profiles in fig, 3 are therefore quite representative. As can be seen from the depiction in fig. 3, while the compressive stress at the local maximum, $CS_{LM}$, is thickness dependent as well as the DoCL, the depth of the local maximum is not. This is apparent from the depiction in fig. 3 as well as from the depiction in fig. 7, wherein the $D_{LM}$ has been plotted as a function of the thickness.

Fig. 4 to 6 may be used to normalize stress profile values obtained for thicknesses other than 0.7 $\mu$m, as has been explained in detail further above.

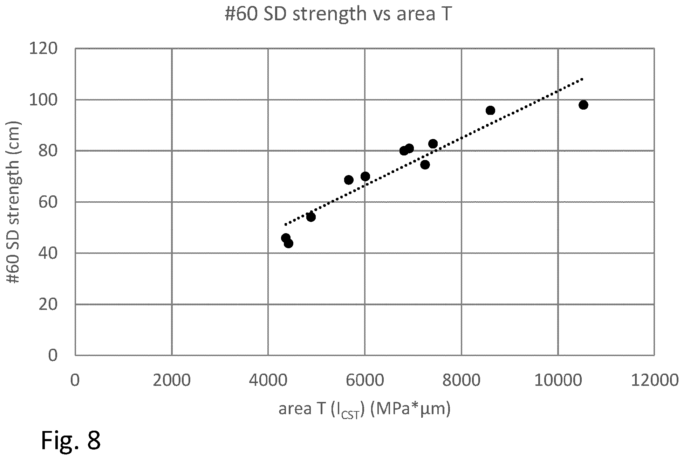

Fig. 8 is a depiction of the strength in set drop testing ("SD strength") vs the area T, that is, the $I_{CST}$, the integral of compressive stress. As can been seen, a higher integral correlates with a higher set drop height. For the test, #60 sandpaper was used.

**Claims**

1. Chemically strengthened glass sheet (1) comprising $SiO_2$, $Li_2O$ and $Al_2O_3$ as glass components and having a thickness between at least 0.3 mm and at most 3 mm, having a stress profile showing a local maximum of compressive stress at a depth within the glass article and, for a thickness of 0.7 mm, exhibiting an integral of compressive stress, Ics, of at least 3,500 MPa*$\mu$m, a DoCL of at least 160 $\mu$m,

   wherein the local maximum is at a depth between at least 25 $\mu$m and at most 60 $\mu$m;
   wherein the compressive stress of the local maximum is at least 60 MPa and at most 150 MPa; and
   wherein the glass sheet further comprises at least 0.4 wt.-% $B_2O_3$
   and/or wherein the glass sheet comprises a) at least 40 wt.-% $SiO_2$ and b) at most 24 wt.-% $Al_2O_3$.

2. The chemically strengthened glass sheet (1) according to claim 1, wherein the glass sheet (1) comprises at most 8 wt.-% $B_2O_3$.

3. The chemically strengthened glass sheet (1) according to any of claims 1 or 2, wherein the glass sheet (1) comprises at most 12 wt.-% $Li_2O$.

4. The chemically strengthened glass sheet according to any of claims 1 to 3, wherein the glass sheet (1) comprises $Na_2O$, wherein preferably the $Na_2O$ content of the glass sheet is between 0.2 wt.-% $Na_2O$ and 16.5 wt.-% $Na_2O$.

5. The chemically strengthened glass sheet (1) according to any of claims 1 to 4, wherein the surface compressive stress is at least 650 MPa and preferably at most 1100 MPa, preferably for a glass sheet thickness of 0.7 mm.

6. The chemically strengthened glass sheet (1) according to any of claims 1 to 5, wherein, for a glass sheet thickness of 0.7 mm, the integral of compressive stress, Ics, is at most 11,000 MPa*$\mu$m.

7. The chemically strengthened glass sheet (1) according to any of claims 1 to 6, comprising the following components, given in wt.-% on an oxide basis:

| | |
|---|---|
| $SiO_2$ | 40 to 70, preferably 60 to 70 |
| $Al_2O_3$ | 7 to 24, preferably 10 to 24 |
| $Li_2O$ | 0.1 to 12, preferably 1 to 12, more preferably 1 to 6, wherein in each case, a preferable lower limit may be 3 |
| $Na_2O$ | 0.2 to 16.5, preferably 0.5 to 15, more preferably 0.5 to 4 |
| $B_2O_3$ | 0 to 8, preferably 0 to 5, more preferably 0.4 to 5 |
| $ZrO_2$ | 0 to 3 |
| $CaO$ | 0 to 6 |
| $K_2O$ | 0 to 1 |
| $MgO$ | 0 to 6 |
| $CeO_2$ | 0 to 1 |
| $ZnO$ | 0 to 1 |
| $P_2O_5$ | 0 to 2 |
| $Fe_2O_3$ | 0 to 0.1 |
| $SrO$ | 0 to 1 |
| $SnO_2$ | 0 to 1 |
| $TiO_2$ | 0 to 2 |
| $Nd_2O_3$ | 0 to 0.5 |
| $SO_3$ | 0 to 0.5 |

(continued)

| Cl | 0 to 0.5 |

8. A method for producing a chemically strengthened glass sheet (1), preferably a chemically strengthened glass sheet (1) according to any of claims 1 to 7, comprising

- providing a glass sheet (1),
- providing a bath comprising a molten alkali salt or a mixture of molten alkali salts,
- immersing the glass sheet (1) in the bath, so that an ion exchange takes place,
- performing at least three ion exchanges.

9. The method as claimed in claim 8, wherein, for the first ion exchange, the bath temperature is between at least 380°C and at most 450°C, preferably at most 440°C,
and/or

wherein, for the second ion exchange, the bath temperature is between at least 360°C and at most 430°C, preferably at most 410°C, more preferably at most 400°C,
and/or
wherein, for the third ion exchange, the bath temperature is between at least 360°C and at most 440°C, preferably at most 420°C.

10. The method as claimed in any of claims 8 to 10, wherein, for the first ion exchange, the duration is between at least 3 hours and at most 15 hours, preferably at most 14 hours
and/or

wherein, for the second ion exchange, the duration is between at least 0.5 hours and at most 5 hours, preferably at most 4.5 hours
and/or
wherein, for the third ion exchange, the duration is between at least 0.5 hours and at most 7 hours, preferably at most 6.5 hours.

11. The method as claimed in any of claims 8 to 10, wherein, for the first ion exchange, the bath comprises a sodium salt, preferably sodium nitrate, and wherein, preferably, the bath comprises, except for unavoidable trace amounts, only a sodium salt, in particular, only sodium nitrate,
and/or

wherein, for the second ion exchange, the bath comprises sodium salt, preferably sodium nitrate, and a lithium salt, preferably lithium nitrate, and wherein the percentage, in weight, of sodium salt is between 60 to 90, and of lithium salt is between 10 and 40,
and/or
wherein, for the third ion exchange, the bath comprises a potassium salt, preferably potassium nitrate, and wherein, preferably, the bath comprises, except for unavoidable trace amounts, only a potassium salt, in particular, only potassium nitrate.

12. A glass sheet (1), preferably a glass sheet (1) according to any of claims 1 to 7, produced or producible in a method according to any of claims in a method 8 to 11.

13. Use of the chemically strengthened glass sheet (1) according to any of claims 1 to 7 or 12 and/or produced in a method according to any of claims 8 to 11 as a cover glass, such as a cover glass for a smartphone, or tablet PC, or any portable device, or for an optical sensor, such as, for example, a LiDAR sensor.

Fig. 1

Fig. 2

2 step IOX stress profiles of different thicknesses of glass A determined
by SLP 1000

Fig. 3

## DoCL vs. thickness for sample A

y = 0,1996x + 27,089

## Fig. 4

## CS$_{LM}$ vs thickness for sample A

y = 0,3703x - 118,38

## Fig. 5

Fig. 6

Fig. 7

Fig. 8

**EP 4 431 475 A1**

Europäisches Patentamt
European Patent Office
Office européen des brevets

## EUROPEAN SEARCH REPORT

Application Number

EP 23 16 2576

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/387904 A1 (ICHIMARU TOMONORI [JP] ET AL) 16 December 2021 (2021-12-16) * paragraph [0001]; claims; figures; examples; tables * ----- | 1-13 | INV. C03C3/097 C03C3/11 C03C21/00 |
| X | US 2022/098091 A1 (GUO XIAOJU [US] ET AL) 31 March 2022 (2022-03-31) * paragraph [0002]; claims; figures; examples; tables * ----- | 1-7,12, 13 | |
| X | US 2022/289625 A1 (KANEHARA KAZUKI [JP] ET AL) 15 September 2022 (2022-09-15) * paragraphs [0077], [0147]; claims; figures; examples; tables * ----- | 8-13 | |
| X | US 2021/179488 A1 (SUNG SU JIN [KR] ET AL) 17 June 2021 (2021-06-17) * paragraph [0044]; claims; figures; examples; tables * ----- | 8-13 | |

TECHNICAL FIELDS SEARCHED (IPC)

C03C

The present search report has been drawn up for all claims

| Place of search | Date of completion of the search | Examiner |
|---|---|---|
| Munich | 2 August 2023 | Wrba, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

21

## ANNEX TO THE EUROPEAN SEARCH REPORT
## ON EUROPEAN PATENT APPLICATION NO.

EP 23 16 2576

This annex lists the patent family members relating to the patent documents cited in the above-mentioned European search report.
The members are as contained in the European Patent Office EDP file on
The European Patent Office is in no way liable for these particulars which are merely given for the purpose of information.

02-08-2023

| Patent document cited in search report | | Publication date | Patent family member(s) | | Publication date |
|---|---|---|---|---|---|
| US 2021387904 | A1 | 16-12-2021 | CN | 112839913 A | 25-05-2021 |
| | | | CN | 112888663 A | 01-06-2021 |
| | | | JP | WO2020075708 A1 | 02-09-2021 |
| | | | JP | WO2020075709 A1 | 02-09-2021 |
| | | | KR | 20210073544 A | 18-06-2021 |
| | | | KR | 20210073545 A | 18-06-2021 |
| | | | TW | 202028147 A | 01-08-2020 |
| | | | TW | 202028148 A | 01-08-2020 |
| | | | TW | 202144307 A | 01-12-2021 |
| | | | US | 2021371332 A1 | 02-12-2021 |
| | | | US | 2021387904 A1 | 16-12-2021 |
| | | | WO | 2020075708 A1 | 16-04-2020 |
| | | | WO | 2020075709 A1 | 16-04-2020 |
| US 2022098091 | A1 | 31-03-2022 | CN | 116490477 A | 25-07-2023 |
| | | | TW | 202212281 A | 01-04-2022 |
| | | | US | 2022098091 A1 | 31-03-2022 |
| | | | WO | 2022066408 A1 | 31-03-2022 |
| US 2022289625 | A1 | 15-09-2022 | CN | 114929641 A | 19-08-2022 |
| | | | JP | WO2021145258 A1 | 22-07-2021 |
| | | | US | 2022289625 A1 | 15-09-2022 |
| | | | WO | 2021145258 A1 | 22-07-2021 |
| US 2021179488 | A1 | 17-06-2021 | CN | 112979158 A | 18-06-2021 |
| | | | KR | 20210077854 A | 28-06-2021 |
| | | | US | 2021179488 A1 | 17-06-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180057401 A1
- US 20180029932 A1
- US 20170166478 A1
- US 9908811 B2
- US 20160122240 A1
- US 20160122239 A1
- US 20170295657 A1
- US 8312739 B2
- US 9359251 B2
- US 9718727 B2
- US 20120052271 A1
- US 20150030840 A1
- US 20140345325 A1
- US 9487434 B2
- US 9517968 B2
- US 9567254 B2
- US 9676663 B2

- US 20180002223 A1
- US 20170129803 A1
- US 201601002014 A1
- US 20150368153 A1
- US 20150368148 A1
- US 20150239775 A1
- US 9908812 B2
- US 9902648 B2
- US 9593042 B2
- WO 2012126394 A1
- US 9540278 B2
- US 8759238 B2
- US 8075999 B2
- US 4055703 A
- DE 102010009584 B4
- CN 102690059 A
- EP 3636609 B1